# EUROPEAN PATENT SPECIFICATION

(11) **EP 1 850 606 B1**
(45) Date of publication and mention of the grant of the patent: **17.06.2009**
(21) Application number: 06113039.9
(22) Date of filing: 25.04.2006
(51) Int. Cl.: H04W 88/02, H04W 4/00

(54) **Filtering messages using information about the sender's location**
Nachrichtenfilterung unter Verwendung von Information über den Aufenthaltsort des Senders
Filtrage des messages en utilisant des informations sur la position de l'envoyeur

(43) Date of publication of application: 31.10.2007
(73) Proprietor: Research In Motion Limited, Waterloo, Ontario N2L 3W8 (CA)
(72) Inventor: Bells, Matthew, Waterloo, Ontario N2L 6M2 (CA); Klassen, Gerhard D., Waterloo, Ontario N2T 1H7 (CA); Fahmy, Samer, Waterloo, Ontario N2L 3P8 (CA); Newton, Garth Adam, Waterloo, Ontario N2K 2T8 (CA)
(74) Representative: Rickard, David John

(56) References cited:
- EP-A- 1 176 840
- EP-A- 1 252 776
- EP-A- 1 564 670
- WO-A-20/05002256
- US-A1- 2005 020 289
- US-A1- 2005 164 720
- US-B1- 6 640 184
- US-B1- 7 010 306
- ROBIN MANNINGS: "Whereness: Ubiquitous Positioning" THE JOURNAL OF THE COMMUNICATIONS NETWORK, vol. 4, 1 January 2005 (2005-01-01), pages 38-48, XP001504546

## Description

There are many techniques by which a mobile device may become aware of its approximate location. In one example, a mobile device that includes a GPS (Global Positioning System) receiver can detect signals from GPS satellites to estimate its location. The precision of a location derived from a GPS system is generally in the range of a few meters to tens of meters, although some receivers can achieve higher accuracy.

In another example, a mobile device that includes a cellular communication interface and is able to communicate with a PLMN (public/private land mobile network) base station may be able to retrieve the location of the base station. Since base stations can have a coverage area of several kilometers, approximating the location of the mobile device by using the location of the base station has a precision generally in the range of 100 meters to 35 kilometers.

In a technique known as AGPS (Assisted Global Positioning System), an assistance server communicates with the mobile device via a network and provides any or a combination of the following types of data to the GPS receiver of the mobile device: precise GPS satellite orbit and clock informations; initial position and time estimate; satellite selection, range and range-rate information. The assistance server is also able to compute position solutions, leaving the GPS receiver with the sole job of collecting range measurements. AGPS can reduce the amount of time required to determine the location of the mobile device.

In a yet another example, the location of a mobile device that includes a wireless local area network (WLAN) interface may be approximated from the fixed and known location of an access point (AP) it communicates with. Depending on the WLAN protocol used and the structure of the WLAN, the mobile device's location may be approximated with a precision of a few meters to hundreds of meters.
US2005/020289 discloses a method for blocking SMS spam messages in an SMS server or a mobile terminal. In the SMS server, a spam-blocking database is accessed to search for a phone number corresponding to the received message, so as to check whether the number is registered in the database. If the SMS message phone number is registered in the spam-blocking database, the procedure is ended without SMS message-processing for the message, so that spam messages are blocked from being transferred to the subscriber.
US2005/164720 discloses a method of filtering messages received on a telephone from a calling telephone. Filtering rules are applied at the receiving telephone to the message. Filtering rules include filtering the message if a telephone number of the calling telephone contains fewer than a predetermined number of digits and filtering the message if there are wildcards in the telephone number of the calling telephone.
WO2005/002256 discloses a method for selectively deleting messages received by a radio telephone. The method includes detecting when the telephone has moved from a previous coverage area to a current coverage area and selectively obtaining a set of coverage area specific messages stored in a memory associated with the telephone, the coverage area specific messages being from a set of messages received when the telephone was in the previous coverage area. The method provides for automatically deleting the coverage area specific messages from the memory when the telephone is in the current coverage area.
Robin Mannings: "Whereness: Ubiquitous Positioning", The Journal of the Communications Network, Volume 4, Part 1, January-March 2005, XP001504546, discloses that the public switched telephone network (PSTN) includes an area code which is intrinsically linked to a geographic area, but that in cellular systems the binding between the telephone number and geography has been abandoned (since one of the advantages of mobility is to be decoupled from geography).
EP1252776 discusses transmission of short message service (SMS) messages. An SMS message is sent from a fixed terminal over the PSTN.
EP1564670 discloses quarantining messages that appear to be questionable, suspicious or untrustworthy from classification as spam or good for a determined time period to allow more data to be collected regarding these messages. When a user receives a message from a location they do not typically receive good messages from or in a language they do not typically receive good messages in, the message can be quarantined as well. The location can be determined based in part on geographic location, IP address, IP address allocation information, country code in FROM domain name, and the like.

### GENERAL

For various reasons, a user of the mobile device may want to filter messages using information about the message sender's location.

In a first main aspect, the invention provides a method in a communication system, the method comprising: at a sending device, sending a message along with location information about a sender of the message to a receiving device, wherein the location information is not more precise than a precision level assigned to the receiving device by the sending device; and at said receiving device, receiving said message and blocking the message or flagging the message as suspicious if the location information received along with the message does not match any expected location or locations of the sender stored at said receiving device.

The location information about a sender of the message may comprise information based on a current location of the sender. The location information about a sender of the message may comprise information based on a geographical location of the sender.

The method may further comprise checking at the receiving device whether the location information matches any expected location or locations of the sender by checking the location information against one or more expected locations stored in an address book and/or against one or more user defined expected locations and/or against one or more previously known locations of the sending device stored in the receiving device. The method may further comprise using the received location information at the receiving device to partly authenticate the sender.

The message may be a short message service 'SMS' message or an e-mail message or an instant message.

The sending device may assign to the receiving device a precision level for the location information about a sender and may ensure that the location information about a sender provided along with the message to the receiving device is not more precise than the precision level assigned to the receiving device.

The sending device may assign the precision level according to one or more criteria.

The precision level may be one of a set of two or more precision levels.

The set may comprise at least one precision level defined in terms of distance and/or any of the following precision levels: continent, country, state, province, county, city, neighborhood, street, postal code, intersection, building, campus, address and coordinates.

In a second main aspect, the invention provides a communication system comprising: a sending device adapted to send a message along with location information about a sender of the message; and a receiving device adapted to receive said message and block the message or flag the message as suspicious if the location information received along with the message does not match any expected location or locations of the sender stored at said receiving device, wherein the location information is not more precise than a precision level assigned to the receiving device by the sending device.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a flowchart of an exemplary method in a mobile device for assigning precision levels to contacts;

Figure 2 is a flowchart of an exemplary method in a mobile device for providing its location information to a contact;

Figure 3 is a flowchart of an exemplary method in a mobile device equipped with a GPS receiver for determining its location; and

Figure 4 is a flowchart of an exemplary method in a communication device for handling a message that is received with location information about the sender of the message; and

Figure 5 is a simplified illustration of an exemplary communication system involving a mobile device.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

A mobile device that includes a communication interface may be used to send messages to contacts of its user. Depending on the applications installed on the mobile device, the messages may be Short Message Service (SMS) messages, e-mail messages, instant messages and the like. In some applications, presence information about the user (e.g., busy, available, etc.) is shared with contacts. Examples for the architecture of the communication system in which the messages and/or presence information are sent include peer-to-peer and client-server.

An enhanced messaging experience is possible if location information for the mobile device is shared with a contact. The location information may be sent to the contact along with a message from the user and/or with the presence information and/or with any notifications or other communications between the mobile device and the contact's communication device.

Some mobile stations, especially those equipped with GPS receivers, are able to determine their location with a high degree of precision. But the user may not wish to share his location with the same precision to all contacts. For example, if the user sends a work-related message to his boss while sitting in a movie theater, the user is unlikely to want the message to be accompanied by precise location information that indicates that the user is not at his workplace.

Accordingly, in some embodiments of the invention, the location of a mobile device is provided to a contact of a user of the mobile device at a precision that does not exceed a precision level assigned to the contact. The precision level is selectable from a set of two or more dissimilar precision levels, and is selected based on one or more criteria.

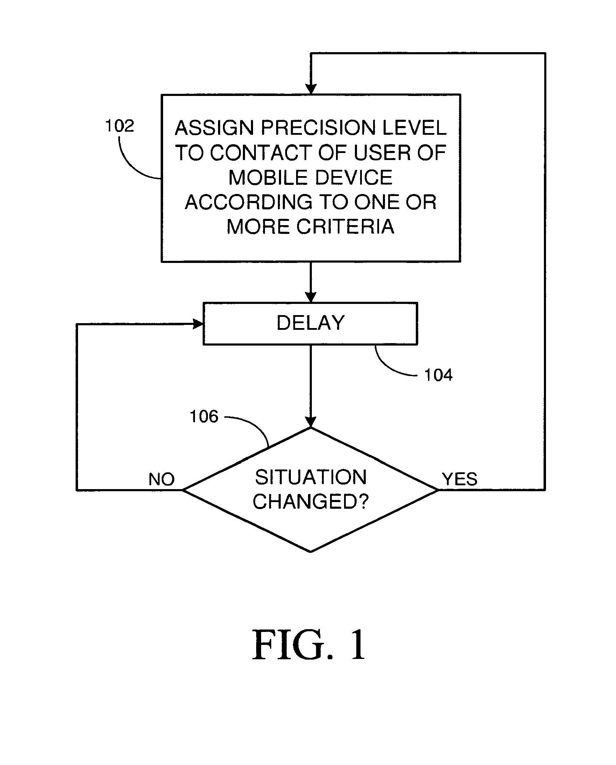

Figure 1 is a flowchart of an exemplary method in a mobile device for assigning precision levels to contacts. At 102, the mobile device assigns a particular precision level from a set of two or more dissimilar precision levels to a contact. This assignment is made according to one or more criteria. After a suitable delay at 104, it is checked at 106 whether the situation has changed. If not, then after another suitable delay at 104, it is checked again at 106 whether the situation has changed. If the situation has changed, then a different precision level may be assigned to the contact at 102, according to the one or more criteria that are now evaluated based upon the changed situation.

The method of Figure 1 may be modified to be event-driven instead of or in addition to incorporating the delay at 104.

A precision level may be defined in terms of distance. For example, a precision level may be defined as "within 100 meters", "within 3 miles" or "within 10 miles".

The set of precision levels may include, for example, continent, country, state, province, county, city, neighborhood, street, postal code, intersection, building, campus, address and coordinates (e.g., latitude and longitude).

One or more criteria may be applied to determine which precision level to assign to which contact. The criteria may include whether the contact belongs to a particular group of contacts. For example, a user may decide to assign a precision level of "continent" or "country" to business contacts that she met at a conference, a precision level of "city" to her customers, a precision level of "neighborhood" to her friends and a precision level of "coordinates" to her sister.

The criteria may be contextual. For example, when the mobile device detects that its user is at work (perhaps because the mobile device is connected to a work network as opposed to a public network), friends of the user are assigned a precision level that does not enable them to track the user while at work, while co-workers are assigned a more precise precision level. When the mobile device detects that its user is not at work (perhaps because the mobile device is no longer connected to the work network), co-workers are denied any location information about the mobile device, while friends are assigned their respective, default not-at-work precision levels.

The criteria may include date and/or time. For example, a contact that is normally denied any location information may be temporarily assigned a precision level and provided with location information during the 30 minutes prior to a calendar meeting in which the contact is participating and that is recorded in the mobile device. In another example, a precision level may be in the form of "within a defined area sometime in the past X minutes". In yet another example, the precision level of a contact may be incrementally increased (to become more precise) more than once prior to a date or time.

The criteria may include the distance between the mobile device and a particular location. For example, the farther you are from home, work, the gym, your favorite pub, or your favorite golf course, the less precise you may want the location information about your mobile device to be.

If the location of the contact is known (or can be assumed), the criteria may include the absolute location of the contact, the distance between the contact and the mobile device, and/or the distance between the contact and a particular location. For example, if the user of the mobile device and a particular contact are scheduled to have a meeting, precision levels of increasing accuracy may be assigned to the contact as the contact and the user approach one another, or as the contact nears the appointed meeting place. Precision levels may be updated automatically in proportion to proximity. For example, while the contact is 100 km away, the position may be updated every 15 minutes, and while the contact is less than 100 m away, the position may be updated every 10 seconds. The location information may be sent encrypted with a one-time session key until both parties are deemed to have met. The parties may be deemed to have met if the mobile device of the user and the communication device of the contact are in the same place, or the time for the meeting has elapsed, or the meeting was cancelled in the mobile device.

Once a contact has been assigned a precision level, the mobile device ensures that any location information of the mobile device provided to that contact is not more precise than the precision level currently assigned to the contact.

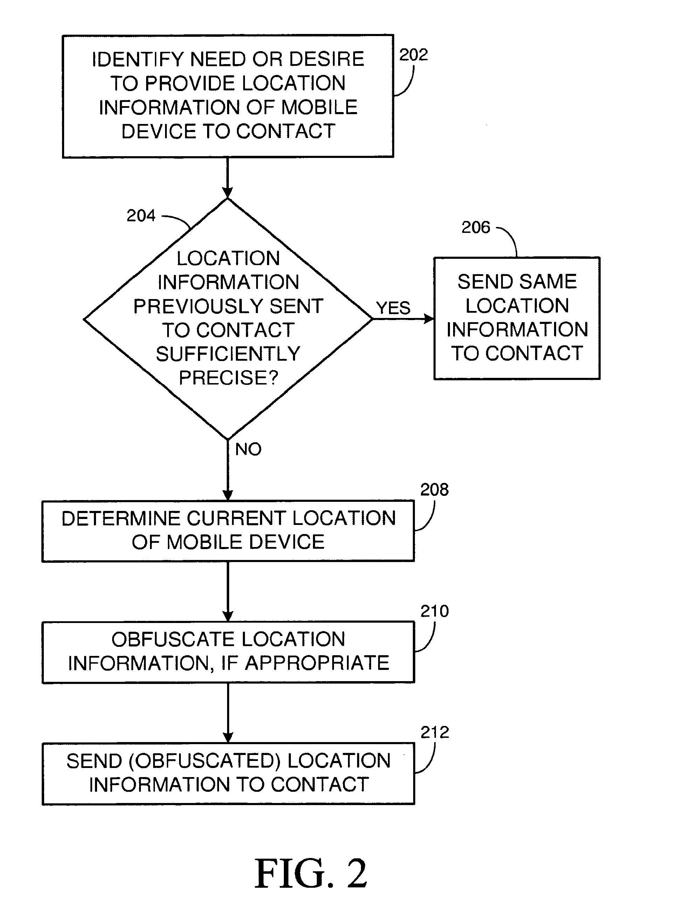

Figure 2 is a flowchart of an exemplary method in a mobile device for providing its location information to a contact. At 202, a need or desire to provide location information of the mobile device to the contact is identified. For example, perhaps presence information about the user of the mobile device is about to be sent to the contact, or perhaps the mobile device is about to send a message from the user to the contact.

It is possible to deduce a more accurate location from the distribution of less accurate location reports. To prevent this, at 204, the mobile device determines whether the location information that was most recently sent to the contact is sufficiently precise according to the precision level of the contact. For example, if the precision level of the contact is "neighborhood" and the mobile device is still within the same neighborhood as previously indicated to the contact, then the location information that was most recently sent is indeed sufficiently precise. In that case, at 206, the same location information that was most recently sent to the contact is sent again. Alternatively, no location information is sent to the contact. In order to enable this, the mobile device keeps a record of each location that it has sent. For example, the mobile device may store one location per contact, perhaps as a field in the contact or as a map or hashtable that associates the contact with the last location sent to it. In another example, the mobile device may store one location per precision level, and the contacts are associated with precision levels. In that case, when the location changes for a given precision level, then contacts associated with that precision are updated.

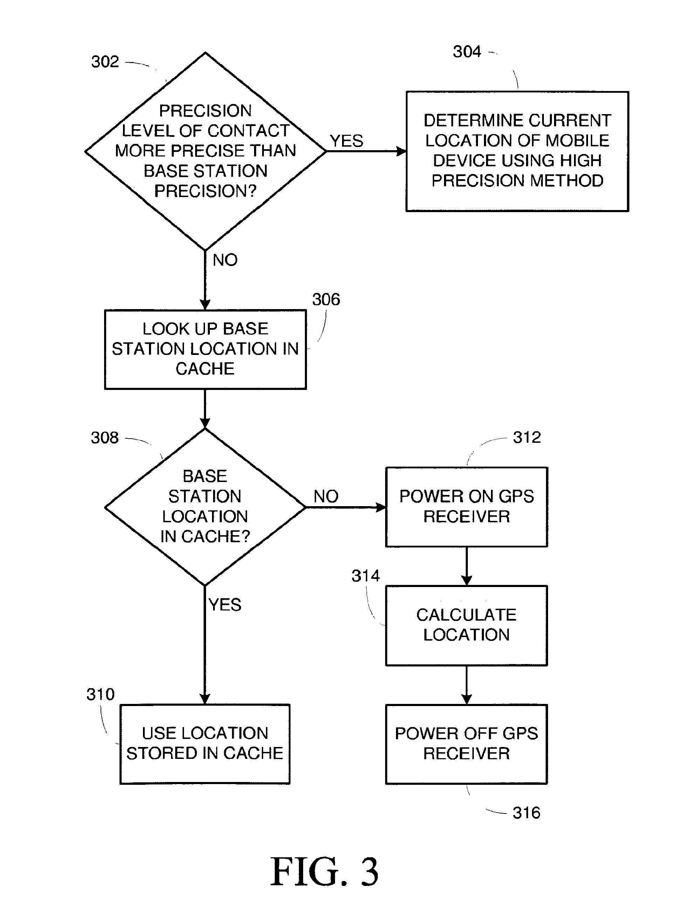

If the location information most recently sent to the contact is not sufficiently accurate according to the precision level of the contact, then at 208, the current location of the mobile device is determined. For example, if the mobile device is equipped with a GPS receiver, the coordinates of the mobile device may be ascertained. In another example, if the mobile device can communicate with a base station of a PLMN network, the mobile device may receive the location of the base station. In yet another example, the mobile device may approximate its location based on the location of a WLAN access point with which it can communicate. Any suitable method for determining the location of the mobile device may be used. Figure 3 is a flowchart of an exemplary method for determining the location of the mobile device.

If the location information determined at 208 is more precise than the precision level assigned to the contact, then at 210 the mobile device obfuscates the location information, for example, by applying noise to or rounding the location information. For example, if the location information determined at 208 is an address, and the precision level assigned to the contact is "postal code", then the location information may be filtered to the postal code of the address. In another example, the mobile device may update the location more often than necessary (this is a form of time noise). In a further example, the mobile device may allow the location information to be inaccurate for an amount of time prior to an update. For example, if updates are every 15 minutes, and the mobile device is slightly out of the region 2 minutes after the most recent update, the mobile device may wait until it has been out of the region for 15 minutes before sending its updated location.

At 212, the mobile device sends the location information (as obfuscated at 210, if applicable) to the contact.

Figure 3 is a flowchart of an exemplary method in a mobile device equipped with a GPS receiver for determining its location.

At 302, it is checked whether the precision level of the contact is more precise than the precision of base station locations. If so, then a high precision method for determining the current location of the mobile device is used at 304. For example, the location of the base station has a precision generally in the range of 100 meters to 35 kilometers. If the precision level of the contact to whom location information about the mobile device is to be sent is "within 25 meters", then a high precision method such as GPS is used to determine the current location of the mobile device.

Otherwise, at 306 the mobile device looks up in its cache the location of the base station with which it is communicating. If the location of the base station is found in the cache (as checked at 308), then at 310, the location found in the cache is used as an approximation of the location of the mobile device.

If the location of the base station is not found in the cache, this may be due to the mobile device having recently changed with which base station it is connected. At 312 the GPS receiver of the mobile device is powered on, at 314 the GPS receiver is used to calculate the mobile device's location, which is stored in the cache, and at 316 the GPS receiver is powered off. Alternatively, if the mobile device is able to estimate its location by another method, that estimated location may be stored in the cache instead. For example, the mobile device may request the location of a base station with which it is communicating, either directly from the base station or from a server.

It will be appreciated that power savings in the mobile device may be achieved by not monitoring GPS data unless high precision is required or the mobile device switches base stations.

Alternatively, if the location of the base station is not found in the cache, the mobile device may communicate with the base station it is currently connected to in order to obtain the location of the base station and store it in the cache.

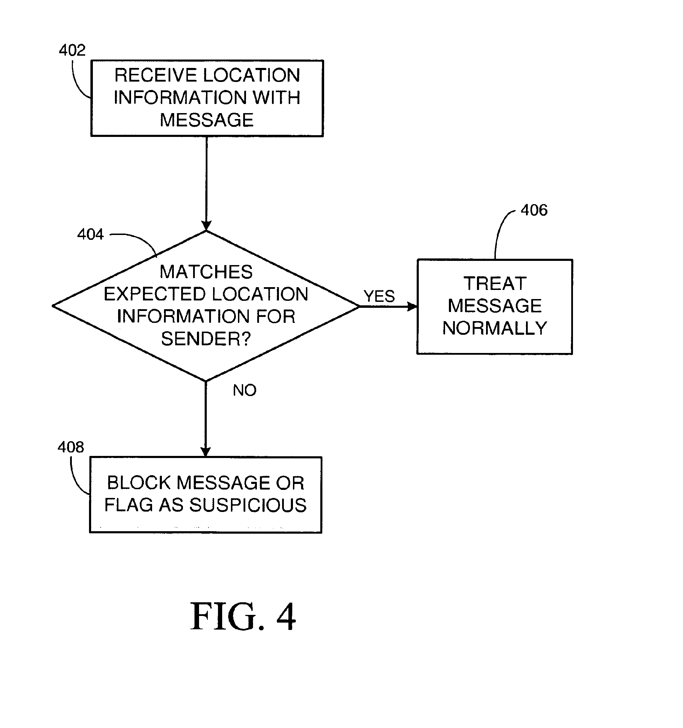

Figure 4 is a flowchart of an exemplary method in a communication device for handling a message that is received with location information about the sender of the message. At 402, the location information about the sender is received by the communication device along with the message.

At 404, the communication device checks whether the location information received with the message matches the expected location information for the sender of the message. For example, the expected location may be culled from an address book stored on or accessible by the communication device. In another example, the expected location may be defined by the user of the communication device. In yet another example, the communication device may store previous known locations of the contact, all of which are deemed expected locations.

If the location information matches, then at 406 the communication device treats the message as usual. But if there is a mismatch, then at 408 the communication device blocks the message or flags it as suspicious.

The location information about the sender that accompanies a message may therefore be used to provide a certain level of authentication. An unknown third party would have a hard time spoofing where the message should be coming from. This authentication may help eliminate spam and virus-based e-mail, since a person or automatic program that generates such messages would not necessarily have access to the expected location information.

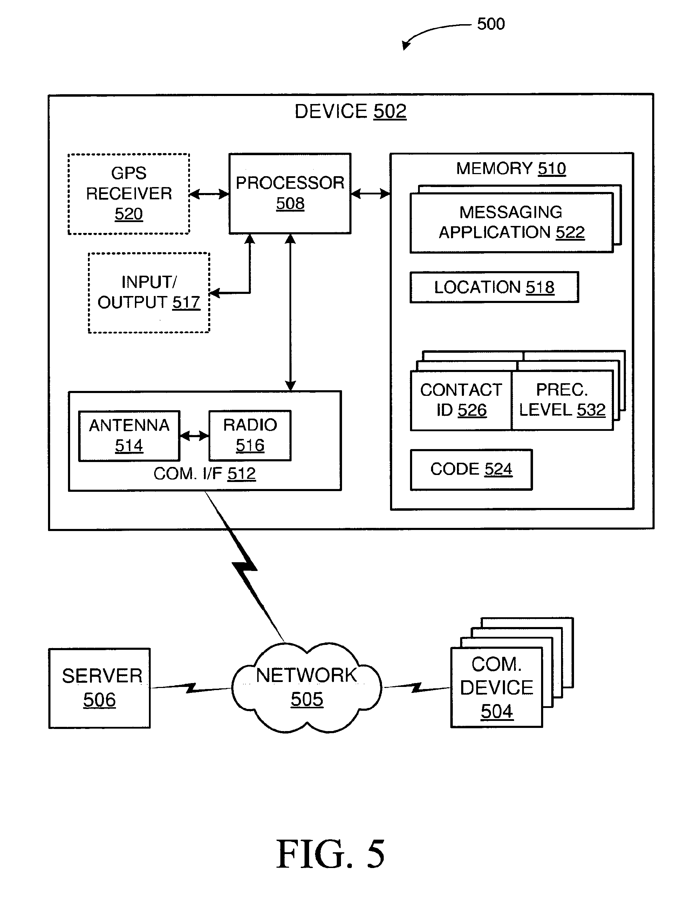

Figure 5 is an illustration of an exemplary communication system involving a mobile device. A system 500 includes a mobile device 502, communication devices 504 and a network 505.

Mobile device 502 includes a processor 508, a memory 510 coupled to processor 508, and a wireless communication interface 512 coupled to processor 508. Wireless communication interface 512 includes at least an antenna 514 and a radio 516 coupled to antenna 514. Mobile device 502 may also include one or more input and/or output components 517.

Using any current or future technique, device 502 is able to obtain an approximation of its physical location and to store information 518 about this approximation in memory 510. For example, mobile device 502 may include a GPS receiver 520 coupled to processor 508. In another example, mobile device 502 may request the location of a base station with which it is communicating, either directly from the base station or from a server as described in U.S. Patent Application No. 11/390,214 filed March 28, 2006 and use the base station location as an approximation of its own location.

Mobile device 502 is able to communicate with network 505 via wireless communication interface 512. Mobile device 502 may provide information about its location to one or more of communication devices 504, and/or to server 506. One or more of communication devices 504 may poll server 506 for the location information of mobile device 502.

Memory 510 may store one or more messaging applications 522. Messaging applications 522, when executed by processor 508, may enable the user of mobile device to send messages to contacts of the user, which are sent through wireless communication interface 512.

Memory 510 may store code 524, which when executed by processor 508, assigns to a contact, identified in memory 510 by an identifier 526, a precision level 532 from a set of two or more dissimilar precision levels. Code 524 also ensures that any location information of the mobile device provided to the contact is not more precise than the precision level currently assigned to the contact. Code 524 may implement the methods of Figures 1, 2 and 3. Precision levels 532 may be selected by a user of mobile device 502, by software and/or by a service.

A non-exhaustive list of examples for network 505 includes any or combination of:
a) wired networks such as the Internet, intranets, Ethernet networks, token rings, Universal Serial Bus (USB), wired networks according to the IEEE 1394-1995, IEEE 1394a-2000, and IEEE 1394b standards (commonly known as "FireWire"), or any combination thereof;
b) cellular networks such as Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication, and the like; and
c) wireless local area networks such as IEEE 802.11, Bluetooth®, Zigbee^{™}, ultra wideband (UWB) and the like; and
d) optical communication networks.

Network 505 may include any combination of additional communication devices (not shown) such as gateways, routers, switches, and the like.

A non-exhaustive list of examples for device 502 includes a mobile terminal, a GPS device, a laptop computer, a personal digital assistant (PDA), a hand-held computer, a cellular telephone, a smart cellphone, an electronic mail (Email) client, and the like.

A non-exhaustive list of examples for devices 504 includes workstations, notebook computers, laptop computers, servers, desktop personal computers, personal digital assistants (PDAs), hand-held computers, cellular telephones, smart cellphones, electronic mail (Email) clients, programmable consumer electronics, network PCs, and the like.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a communication system (500), the method comprising:
at a sending device (502), sending a message along with location information about a sender of the message to a receiving device (504), wherein the location information is not more precise than a precision level (532) assigned to the receiving device (504) by the sending device (502); and
at said receiving device (504), receiving said message and blocking the message or flagging the message as suspicious if the location information received along with the message does not match any expected location or locations of the sender stored at said receiving device (504).

2. The method of claim 1, wherein said location information about a sender of the message comprises information based on a current location of the sender.

3. The method of claim 1 or claim 2, wherein said location information about a sender of the message comprises information based on a geographical location of the sender.

4. The method of any one of claims 1 to 3, further comprising checking at the receiving device (504) whether the location information matches any expected location or locations of the sender by checking the location information against one or more expected locations stored in an address book and/or against one or more user defined expected locations and/or against one or more previously known locations of the sending device (502) stored in the receiving device (504).

5. The method of any one of the preceding claims, further comprising using the received location information at the receiving device (504) to partly authenticate the sender.

6. The method of any one of the preceding claims, wherein the message is a short message service 'SMS' message or an e-mail message or an instant message.

7. The method of claim 1, wherein the sending device (502) assigns the precision level (532) according to one or more criteria.

8. The method of claim 1 or claim 7, wherein the precision level (532) is one of a set of two or more precision levels.

9. The method of claim 8, wherein the set comprises at least one precision level (532) defined in terms of distance and/or any of the following precision levels: continent, country, state, province, county, city, neighborhood, street, postal code, intersection, building, campus, address and coordinates.

10. A communication system (500) comprising:
a sending device (502) adapted to send a message along with location information about a sender of the message; and
a receiving device (504) adapted to receive said message and block the message or flag the message as suspicious if the location information received along with the message does not match any expected location or locations of the sender stored at said receiving device (504),
wherein the location information is not more precise than a precision level (532) assigned to the receiving device (504) by the sending device (502).

11. The communication system (500) of claim 10, wherein the precision level (532) is one of a set of two or more precision levels.

12. The communication system (500) of claim 11, wherein the set comprises at least one precision level (532) defined in terms of distance and/or any of the following precision levels: continent, country, state, province, county, city, neighborhood, street, postal code, intersection, building, campus, address and coordinates.

## Patentansprüche

1. Verfahren in einem Kommunikationssystem (500), das Verfahren umfassend:
in einem Sendegerät (502) das Senden einer Nachricht zusammen mit Informationen über den Aufenthaltsort eines Absenders der Nachricht an ein Empfangsgerät (504), wobei die Informationen über den Aufenthaltsort nicht präziser sind als eine Präzisionsstufe (532), die dem Empfangsgerät (504) durch das Sendegerät (502) zugewiesen wird; und
im Empfangsgerät (504) das Empfangen der Nachricht und das Blockieren der Nachricht oder das Markieren der Nachricht als verdächtig, wenn die zusammen mit der Nachricht empfangenen Informationen über den Aufenthaltsort nicht mit einem erwarteten Aufenthaltsort bzw. mit Aufenthaltsorten des Absenders übereinstimmen, die im Empfangsgerät (504) gespeichert sind.

2. Verfahren gemäß Anspruch 1, wobei die Informationen über den Aufenthaltsort eines Absenders der Nachricht Informationen umfassen, die auf einem aktuellen Aufenthaltsort des Absenders basieren.

3. Verfahren gemäß Anspruch 1 oder Anspruch 2, wobei die Informationen über den Aufenthaltsort eines Absenders der Nachricht Informationen umfassen, die auf einem geografischen Aufenthaltsort des Absenders basieren.

4. Verfahren gemäß einem der Ansprüche 1 bis 3, des Weiteren umfassend das Überprüfen im Empfangsgerät (504), ob die Informationen über den Aufenthaltsort mit einem erwarteten Aufenthaltsort bzw. mit Aufenthaltsorten des Absenders übereinstimmen, indem eine vergleichende Überprüfung der Informationen über den Aufenthaltsort mit einem oder mehreren erwarteten Aufenthaltsorten, die in einem Adressbuch gespeichert sind, und/oder mit einem oder mehreren benutzerdefinierten erwarteten Aufenthaltsorten und/oder mit einem oder mehreren zuvor bekannten Aufenthaltsorten des Sendegeräts (502), die im Empfangsgerät (504) gespeichert sind, erfolgt.

5. Verfahren gemäß einem der vorherigen Ansprüche, des Weiteren umfassend das Verwenden der empfangenen Informationen über den Aufenthaltsort im Empfangsgerät (504), um den Absender teilweise zu authentifizieren.

6. Verfahren gemäß einem der vorherigen Ansprüche, wobei es sich bei der Nachricht um eine SMS-Nachricht (Short Message Service) oder eine E-Mail-Nachricht oder eine Instant Message handelt.

7. Verfahren gemäß Anspruch 1, wobei das Sendegerät (502) die Präzisionsstufe (532) entsprechend einem oder mehreren Kriterien zuweist.

8. Verfahren gemäß Anspruch 1 oder Anspruch 7, wobei die Präzisionsstufe (532) eine aus einem Satz von zwei oder mehr Präzisionsstufen ist.

9. Verfahren gemäß Anspruch 8, wobei der Satz mindestens eine Präzisionsstufe (532) umfasst, die in Bezug auf die Entfernung definiert ist, und/oder beliebige der folgenden Präzisionsstufen: Kontinent, Land, Bundesland, Provinz, Landkreis, Ort, Ortsteil, Straße, Postleitzahl, Straßenkreuzung, Gebäude, Gelände, Adresse und Koordinaten.

10. Kommunikationssystem (500), umfassend:
ein Sendegerät (502), das dazu eingerichtet ist, eine Nachricht zusammen mit Informationen über den Aufenthaltsort eines Absenders der Nachricht zu senden; und
ein Empfangsgerät (504), das dazu eingerichtet ist, die Nachricht zu empfangen und die Nachricht zu blockieren oder die Nachricht als verdächtig zu markieren, wenn die zusammen mit der Nachricht empfangenen Informationen über den Aufenthaltsort nicht mit einem erwarteten Aufenthaltsort bzw. mit Aufenthaltsorten des Absenders übereinstimmen, die im Empfangsgerät (504) gespeichert sind,
wobei die Informationen über den Aufenthaltsort nicht präziser sind als eine Präzisionsstufe (532), die dem Empfangsgerät (504) durch das Sendegerät (502) zugewiesen wird.

11. Kommunikationssystem (500) gemäß Anspruch 10, wobei die Präzisionsstufe (532) eine aus einem Satz von zwei oder mehr Präzisionsstufen ist.

12. Kommunikationssystem (500) gemäß Anspruch 11, wobei der Satz mindestens eine Präzisionsstufe (532) umfasst, die in Bezug auf die Entfernung definiert ist, und/oder beliebige der folgenden Präzisionsstufen: Kontinent, Land, Bundesland, Provinz, Landkreis, Ort, Ortsteil, Straße, Postleitzahl, Straßenkreuzung, Gebäude, Gelände, Adresse und Koordinaten.

## Revendications

1. Un procédé dans un système de communication (500), le procédé comportant les étapes visant à :
au niveau d'un dispositif d'envoi (502), envoyer un message avec des informations de localisation sur un expéditeur du message à un dispositif de réception (504), où les informations de localisation ne sont pas plus précises qu'un niveau de précision (532) attribué au dispositif de réception (504) par le dispositif d'envoi (502) ; et
au niveau dudit dispositif de réception (504), recevoir ledit message et bloquer le message ou signaler le message comme suspect si les informations de localisation reçues avec le message ne correspondent pas à une localisation quelconque ou des localisations quelconques attendue(s) de l'expéditeur stockée(s) au niveau dudit dispositif de réception (504).

2. Le procédé de la revendication 1, dans lequel lesdites informations de localisation sur un expéditeur du message comportent des informations basées sur une localisation actuelle de l'expéditeur.

3. Le procédé de la revendication 1 ou de la revendication 2, dans lequel lesdites informations de localisation sur un expéditeur du message comportent des informations basées sur une localisation géographique de l'expéditeur.

4. Le procédé de n'importe laquelle des revendications 1 à 3, comportant de plus l'étape visant à vérifier au niveau du dispositif de réception (504) si les informations de localisation correspondent à une localisation quelconque ou des localisations quelconques attendue(s) de l'expéditeur en vérifiant les informations de localisation par rapport à une ou plusieurs localisation(s) attendue(s) stockée(s) dans un carnet d'adresses et/ou par rapport à une ou plusieurs localisation(s) attendue(s) définie(s) par l'utilisateur et/ou par rapport à une ou plusieurs localisation(s) précédemment connue(s) du dispositif d'envoi (502) stockée(s) dans le dispositif de réception (504).

5. Le procédé de n'importe laquelle des revendications précédentes, comportant de plus l'étape visant à utiliser les informations de localisation reçues au niveau du dispositif de réception (504) pour authentifier partiellement l'expéditeur.

6. Le procédé de n'importe laquelle des revendications précédentes, où le message est un message de service de messages courts (SMS) ou un message e-mail ou un message instantané.

7. Le procédé de la revendication 1, où le dispositif d'envoi (502) attribue le niveau de précision (532) selon un ou plusieurs critère(s).

8. Le procédé de la revendication 1 ou de la revendication 7, où le niveau de précision (532) est un niveau de précision parmi un ensemble de deux niveaux de précision ou plus.

9. Le procédé de la revendication 8, où l'ensemble comporte au moins un niveau de précision (532) défini en termes de distance et/ou un niveau de précision quelconque parmi les niveaux de précision suivants : continent, pays, Etat, province, comté, ville, quartier, rue, code postal, intersection, bâtiment, campus, adresse et coordonnées.

10. Un système de communication (500) comportant :
un dispositif d'envoi (502) adapté pour envoyer un message avec des informations de localisation sur un expéditeur du message ; et
un dispositif de réception (504) adapté pour recevoir ledit message et bloquer le message ou signaler le message comme suspect si les informations de localisation reçues avec le message ne correspondent pas à une localisation quelconque ou des localisations quelconques attendue(s) de l'expéditeur stockée(s) au niveau dudit dispositif de réception (504),
où les informations de localisation ne sont pas plus précises qu'un niveau de précision (532) attribué au dispositif de réception (504) par le dispositif d'envoi (502).

11. Le système de communication (500) de la revendication 10, où le niveau de précision (532) est un niveau de précision parmi un ensemble de deux niveaux de précision ou plus.

12. Le système de communication (500) de la revendication 11, où l'ensemble comporte au moins un niveau de précision (532) défini en termes de distance et/ou un niveau de précision quelconque parmi les niveaux de précision suivants : continent, pays, Etat, province, comté, ville, quartier, rue, code postal, intersection, bâtiment, campus, adresse et coordonnées.
